# EUROPÄISCHE PATENTSCHRIFT

(11) **EP 4 477 472 B1**
(45) Veröffentlichungstag und Bekanntmachung des Hinweises auf die Patenterteilung: **18.02.2026**
(21) Anmeldenummer: 24175813.5
(22) Anmeldetag: 08.11.2022
(51) Int. Cl.: B60R 11/02, B60K 35/22, B60K 35/50, B60K 35/53, B60R 11/00

(54) **BAUGRUPPE FÜR EIN FAHRZEUG**
ASSEMBLY FOR A VEHICLE
ENSEMBLE POUR UN VÉHICULE

(30) Priorität: 02.12.2021 DE 102021131756
(43) Veröffentlichungstag der Anmeldung: 18.12.2024
(62) Teilanmeldung aus: 22206159.0
(73) Patentinhaber: Ford Global Technologies, LLC, Dearborn, MI 48126 (US)
(72) Erfinder: Voigt, Torsten, 51503 Rösrath (DE); Dawid, Martin, 42929 Wermelskirchen (DE); Bürger, Stefan, 40723 Hilden (DE)
(74) Vertreter: Markowitz, Markus

(56) Entgegenhaltungen:
- EP-A1- 3 611 420
- DE-A1- 102010 053 344
- US-A1- 2017 313 191

## Beschreibung

Die Erfindung betrifft eine Baugruppe für ein Fahrzeug, mit den Merkmalen des Oberbegriffs von Anspruch 1.

Bei Kraftfahrzeugen werden in jüngerer Zeit mechanische Bedienelemente wie Knöpfe, Schalter oder Regler zunehmend durch virtuelle Bedienelemente ersetzt, die auf einem Touchscreen dargestellt sind. Der Touchscreen dient in der Regel gleichzeitig zu Anzeige von Informationen für den Fahrer. Außerdem können Anzeige und virtuelle Bedienelemente in unterschiedlicher Weise angepasst und verändert werden, z.B. indem zwischen unterschiedlichen Modi bzw. Menüs gewechselt wird, die sich z.B. auf Navigation, Fahrzeugfunktionen, Unterhaltungsmedien und anderes beziehen können. Es ist somit eine vielseitige Nutzbarkeit gegeben. Allerdings benötigt ein solcher Touchscreen, da er für den Benutzer gut ablesbar und bedienbar sein soll, relativ viel Fläche z.B. im Bereich des Armaturenbretts. Diese Fläche kann nicht für andere Zwecke genutzt werden, beispielsweise als Zugang zu Ablagefächern.

Mit der WO 2020 / 035 612 A1 (welche der EP 3 611 420 A1 entspricht) soll eine verbesserte Vorrichtung zum Tragen eines Monitors, insbesondere ein schwenkbarer Monitorträger, bereitgestellt werden, wobei insbesondere eine Vorrichtung zum Tragen eines Monitors mit verminderter benötigter Betätigungskraft durch einen Bediener beim Schwenken des getragenen Monitors bereitgestellt werden soll. Ein schwenkbarer Monitorträger umfasst dabei ein Anbindungselement zum Verbinden mit einem Monitor und ein Stützgestell zum Abstützen der Vorrichtung gegen die Umgebung, wobei das Anbindungselement und das Stützgestell relativ zueinander schwenkbar angeordnet sind, wobei das Stützgestell und das Anbindungselement über ein ungleichmäßig übersetzendes Getriebe zum Bereitstellen der Schwenkbarkeit des Anbindungselements relativ zum Stützgestell schwenkbar miteinander verbunden sind oder das Stützgestell und das Anbindungselement über mindestens ein Drehgelenk zum Bereitstellen der Schwenkbarkeit des Anbindungselements relativ zum Stützgestell schwenkbar miteinander verbunden sind. wobei ein Motor, bevorzugt ein Elektromotor, zum Unterstützen der Schwenkbewegung des Anbindungselements relativ zum Stützgestell vorgesehen ist. Das Stützgestell ist üblicherweise an einer Decke, an einer Wand oder einem Boden eines Raumes befestigt. Der Monitor ist dabei so schwer, dass ein Motor zum Unterstützen der Schwenkbewegung des Anbindungselements relativ zum Stützgestell vorgesehen ist, so dass die durch einen Benutzer aufzubringenden, zum Schwenken erforderlichen Bedienkräfte und/oder Momente reduziert werden. Der Kippmechanismus ist hinter dem Monitor platziert, und bewirkt lediglich ein Verschwenken, also Kippen, wobei der Schwerpunkt des Monitors bei dem Verschwenken stets auf demselben Höhenniveau gehalten wird, was für Büroräume wenig nachteilig ist. Ein Fahrzeuginnenraum dagegen hat knapp zur Verfügung stehende Innenraumresourcen die durch einen in seinem Schwerpunkt unveränderlichen Monitor erheblich beeinträchtigt sind.

Der DE 43 29 995 A1 liegt das Problem zugrunde, eine Vorrichtung zur Aufnahme eines Informationsträgers zu schaffen, die es ermöglicht, diesen Informationsträger im Bereich eines jeweiligen Arbeitsplatzes platzsparend so unterzubringen, dass der Benutzer ohne Anstrengung aus seiner dein Arbeitsplatz angemessenen Sitz- oder Stehposition den Informationsträger betrachten und/oder lesen kann. Auch soll die Vorrichtung bei hoher Steifigkeit leichtgängig und sicher handhabbar sein. Zur Gruppe der Informationsträger gehören dabei Pläne aller Art, Zeichnungen, Ausdrucke und handschriftliche Skizzen. Vorgeschlagen wird daher eine Vorrichtung zur Aufnahme von Informationsträgern im Bereich eines Arbeitsplatzes mit einer verstellbaren Einrichtung zur Aufnahme des Informationsträgers und einer im Bereich des Arbeitsplatzes befestigten Trageinrichtung. Zwischen der Aufnahmeeinrichtung und Teilen der Trageinrichtung ist ein getriebeartiger Verstellmechanismus angeordnet. Dieser Mechanismus lagert die Aufnahmeeinrichtung relativ zum Benutzer des Arbeitsplatzes jeweils in der Höhe, im Abstand und im Neigungswinkel zwangsgekoppelt verstellbar. Dabei wird die Neigung der Aufnahmeeinrichtung abhängig von ihrer jeweiligen Verstellposition zumindest bereichsweise geändert. Die Aufnahmeeinrichtung wird unterteilt in eine Aufnahmeunterlage und ein Mittel zur Befestigung des Informationsträgers auf dieser Aufnahmeunterlage. Die Aufnahmeunterlage ist weder zwingend eben, noch durchgängig geschlossen. Sie ist bezüglich ihrer Abmessungen so dimensioniert, dass sie eine Zeichnung in der Blattgrösse A0 nach DIN 823 aufnehmen kann. Die Trageinrichtung dient der Anordnung der Vorrichtung im Bereich des Arbeitsplatzes und zur Verstellung der Aufnahmeeinrichtung relativ zum Ort der Anordnung. Dieser Ort, an dem die Trageinrichtung befestigt oder aufgestellt wird, ist bei einem Büroarbeitsplatz der Arbeitstisch. An ihm wird die Trageinrichtung z. B. mittels einer lösbaren Klemmvorrichtung gehalten. Der Verstellmechanismus ermöglicht eine zwangsgekoppelte Verlagerung der Aufnahmeeinrichtung jeweils in der Höhe, im Abstand zum Arbeitsplatzbenutzer und in der Neigung. Der Benutzer kann die Aufnahmevorrichtung so verstellen, dass sie, vergleichbar mit einem Zeichenbrett, unmittelbar vor ihm angeordnet ist. In dieser Verstellposition ist die Aufnahmeunterlage vorzugsweise wie ein Zeichenbrett leicht schräg nach hinten geneigt, so dass der Benutzer bei Bedarf auch sitzend den Informationsträger studieren oder bequem beschreiben kann. Wird der Informationsträger nicht mehr im Nahbereich des Benutzers benötigt, wird er in eine Position oberhalb des Arbeitsbereiches verstellt. Die nach oben und hinten verstellte Aufnahmeeinrichtung erfährt während des Zurückweichens in Kombination mit der Aufwärtsbewegung eine Schwenkbewegung. In der oberen Position ist die Oberkante der beispielsweise ebenen Aufnahmeunterlage nach vorn geneigt. Der Arbeitsplatzbenutzer blickt nach oben auf den nun "hängenden" Informationsträger. Die Neigungsänderung hat den Vorteil, dass der Benutzer wiederum auch sitzend bequem, in ergonomisch günstiger Weise, den Informationsträger aus ca. 60 bis 80 cm Entfernung betrachten kann. Sein Blick trifft nahezu senkrecht auf den mittleren Bereich der Aufnahmeunterlage, was ein entspanntes Betrachten ermöglicht. Ersichtlich ist, dass diese für einen Arbeitsplatz mit den vorhandenen weitreichenden Raumverhältnissen einsetzbare Vorrichtung in einem Fahrzeuginnenraum mit seinen knapp bemessenen Freiräumen unter keinen Umständen montierbar ist.

Die DE 10 2013 013 694 B3 betrifft eine Anzeigeeinrichtung für ein Kraftfahrzeug mit einem verstellbaren Monitor, einem dem Monitor zugeordneten Verstellantrieb, der einen Mitnehmer aufweist, der mit dem Monitor gekoppelt ist, und einer Steuereinrichtung zur Ansteuerung des Verstellantriebs, wobei der Monitor durch eine Kulissenführung geführt ist und mittels des Verstellantriebs zwischen einer ersten und einer zweiten Stellung verstellbar ist, wobei der Verstellantrieb ein Linearantrieb ist, der wenigstens einen entlang wenigstens einer Antriebsführungsschiene linear verschiebbaren Schlitten aufweist, an dem wenigstens ein Piezoaktor zur Verschiebung des Schlittens entlang der Antriebsführungsschiene vorgesehen ist. Solche Schienenführungen sind schwierig zu realisieren und neigen mit zunehmender Lebensdauer zu Verschleiß, der wiederum die mechanischen Eigenschaften beeinträchtigt. Der Monitor der beschriebenen Anzeigeeinrichtung kann nur zwischen zwei Stellungen bewegt werden, und zwar der ersten Stellung, in der der Monitor insbesondere im Armaturenbrett versenkt ist oder bildschirmseitig auf dem Armaturenbrett aufliegt, wodurch eine Lagerposition erreicht wird, in der der Bildschirm geschützt ist, und der zweiten Stellung, die insbesondere eine Benutzungsposition darstellt, in der der Monitor aus dem Armaturenbrett ausgefahren und derart aufgestellt ist, dass ein Benutzer den Bildschirm betrachten kann. Zwischenpositionen zwischen den beiden Endstellungen sind nicht vorgesehen. Das Ein- und Ausfahren der Anzeigeeinrichtung soll den Bildschirm schützen und dem Kraftfahrzeug ein wertigeres Ambiente verleihen, wobei aber der Aufnahmeraum für den Monitor im Armaturenbrett nur für diesen genutzt werden kann, ohne dass andere Gegenstände darin gelagert werden dürfen, da diese bei einem Einfahren zumindest störend wären.

Weiterer Stand der Technik ist aus den DE 10 2010 053 344 A1 und US 2017 / 313 191 A1 bekannt.

Angesichts des aufgezeigten Standes der Technik bietet die Nutzbarkeit eines Fahrzeuginnenraums mit wenigstens einem Bildschirm durchaus noch Raum für Verbesserungen.

Der Erfindung liegt die Aufgabe zugrunde, eine flexible, zuverlässige Nutzbarkeit eines Fahrzeuginnenraums, der wenigstens einen Bildschirm aufweist, zu ermöglichen.

Erfindungsgemäß wird die Aufgabe durch eine Baugruppe mit den Merkmalen des Anspruchs 1 gelöst.

Aufgezeigt wird eine Baugruppe für ein Fahrzeug, aufweisend ein Innenraumelement sowie ein mit diesem über einen Verstellmechanismus verbundenes Anzeigeelement mit einer Bildschirmfläche, wobei das Anzeigeelement mittels des Verstellmechanismus' verstellbar ist zwischen einer Aufstellposition, in welcher die Bildschirmfläche bezüglich einer horizontalen Verlagerungsachse auf einer Anzeigeseite angeordnet ist, und einer Absenkposition, in welcher sie gegenüber der Aufstellposition bezüglich der Hochachse des Fahrzeugs abwärts sowie bezüglich der Verlagerungsachse zur Anzeigeseite hin verlagert ist und die Bildschirmfläche von der Hochachse fort abwärts geschwenkt ist, wobei der Verstellmechanismus einen unteren Arm sowie einen oberen Arm aufweist, die jeweils über eine Anzeige-Schwenkachse mit dem Anzeigeelement verbunden sind, und wobei der untere Arm in der Aufstellposition niedriger angeordnet ist als der obere Arm. Die Baugruppe ist dadurch gekennzeichnet, dass der untere Arm und der obere Arm über wenigstens eine Innenraum-Schwenkachse wenigstens indirekt mit dem Innenraumelement, welches wenigstens teilweise zu einer Mittelkonsole und/oder einem Armaturenbrett gehört, schwenkbar verbunden ist, wobei die Verlagerungsachse der Längsachse des Fahrzeugs entspricht und die Anzeigeseite bezüglich der Längsachse heckseitig angeordnet ist, und wobei im Bereich des Innenraumelements eine Zugangsöffnung eines Stauraums ausgebildet ist, zu welcher der Zugang in der Aufstellposition oder der Absenkposition durch das Anzeigeelement wenigstens eingeschränkt ist und die durch Verstellen des Anzeigeelements in die jeweils andere Position wenigstens überwiegend freigebbar ist.

Die Unteransprüche betreffen vorteilhafte Ausgestaltungen der Erfindung.

Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Durch die Erfindung wird eine Baugruppe für ein Fahrzeug zur Verfügung gestellt. Die Baugruppe ist insbesondere für Kraftfahrzeuge wie Lkw oder Pkw vorgesehen. Allerdings ist zumindest in einigen Ausführungsformen beispielsweise eine Anwendung für Luft- oder Wasserfahrzeuge denkbar. Die Baugruppe kann neben den nachfolgend explizit genannten Elementen noch weitere Elemente aufweisen.

Die Baugruppe weist ein Innenraumelement auf sowie ein mit diesem über einen Verstellmechanismus verbundene Anzeigeelement mit einer Bildschirmfläche. Das Innenraumelement ist dem Innenraum des Fahrzeugs zugeordnet und kann insbesondere eine Oberfläche aufweisen, die vom Innenraum zugänglich ist. Es könnte allerdings auch mit einer Verkleidung versehen sein, die die entsprechende Oberfläche bildet und die evtl. nicht als Teil des Innenraumelements angesehen werden kann. Im Falle eines Kraftfahrzeugs mit mehreren Sitzreihen kann das Innenraumelement insbesondere im Bereich der vorderen bzw. vordersten Sitzreihe angeordnet sein, im Falle von nicht-autonomen Fahrzeugen also im Bereich des Fahrer- oder Beifahrersitzes. Das Anzeigeelement weist eine Bildschirmfläche auf. Diese dient zur elektronischen, normalerweise digitalen, visuellen Anzeige. D.h. auf der Bildschirmfläche können visuelle Informationen angezeigt werden, die verändert werden können. Die Bildschirmfläche ist Teil eines Bildschirms oder kann vereinfachend auch als Bildschirm bzw. Display bezeichnet werden. Normalerweise ist sie eben ausgebildet, sie könnte aber auch eine konvexe und/oder konkave Krümmung aufweisen. Das Anzeigeelement kann Teil eines Infotainmentsystems des Fahrzeugs sein, wobei über die Bildschirmfläche Unterhaltungsinformationen angezeigt werden können ebenso wie Informationen, die den Betrieb des Fahrzeugs betreffen. Insbesondere kann die Bildschirmfläche gleichzeitig als Eingabefläche fungieren, d.h. es können auf der Bildschirmfläche virtuelle Bedienelemente angezeigt werden und über Sensoren kann eine Berührung eines Bedienelements durch einen Benutzer registriert werden. Das Anzeigeelement ist über den Verstellmechanismus mit dem Innenraumelement verbunden, wobei es denkbar ist, dass die Verbindung indirekt über einer Halterung gegeben ist, mit welcher das Anzeigeelement abnehmbar verbunden ist. Eine derartige Halterung könnte jedoch auch als Teil des Verstellmechanismus' angesehen werden.

Wie erwähnt, ist das Anzeigeelement mittels des Verstellmechanismus' verstellbar zwischen einer Aufstellposition, in welcher die Bildschirmfläche bezüglich einer horizontalen Verlagerungsachse auf einer Anzeigeseite angeordnet ist, und einer Absenkposition, in welcher sie gegenüber der Absenkposition bezüglich der Hochachse des Fahrzeugs abwärts sowie bezüglich der Verlagerungsachse zur Anzeigeseite hin verlagert ist und die Bildschirmfläche von der Hochachse fort abwärts geschwenkt ist. Die Aufstellposition und die Absenkposition bilden Endpositionen einer Verstellbewegung, die als Kombination einer translatorischen Verschiebung und einer Rotation aufgefasst werden kann. In der Aufstellposition ist die Bildschirmfläche bezüglich einer horizontalen Achse, die hier als Verlagerungsachse bezeichnet wird, auf einer Seite angeordnet, die als Anzeigeseite bezeichnet wird. Die Bezeichnung "Anzeigeseite" bezieht sich darauf, dass ein Benutzer von dieser Seite die Bildschirmfläche sehen kann. Die Verlagerungsachse verläuft horizontal bezüglich des bestimmungsgemäß eingebauten Zustands im Fahrzeug, also innerhalb der X-Y-Ebene des Fahrzeugs. Das Anzeigeelement (bzw. die Bildschirmfläche) kann in der Aufstellposition als aufgestellt bezeichnet werden, wobei die Bildschirmfläche bspw. einen Winkel zwischen 0° und 45° oder zwischen 0° und 30° mit der Hochachse (Z-Achse) des Fahrzeugs einschließen kann.

Durch die translatorische Verschiebung wird das Anzeigeelement von der Aufstellposition zur Absenkposition abwärts verlagert sowie entlang der horizontalen Verlagerungsachse zur Anzeigeseite hin. Somit wird die Bildschirmfläche von der Hochachse fort geschwenkt und nähert sich einer horizontalen bzw. liegenden Position oder gelangt in diese. Unter Umständen kann die Bildschirmfläche in der Absenkposition horizontal angeordnet sein, also in einem Winkel von 90° zur Hochachse. Wenngleich hier explizit Bezug auf die Aufstellposition und die Absenkposition genommen wird, durchläuft das Anzeigeelement beim Verstellen selbstverständlich Zwischenpositionen, die u.U. auch vorteilhaft nutzbar sein können. Selbstverständlich ist das Anzeigeelement in jeder seiner Positionen voll bedienfähig und betriebsbereit. Das Verstellen zwischen der Aufstellposition und der Absenkposition ermöglicht zum einen eine für den Betrachter günstige Ausrichtung der Bildschirmfläche. Er kann hiermit zum einen die Bildschirmfläche so einstellen, dass er möglichst senkrecht auf die Bildschirmfläche blickt. Außerdem ist es möglich, durch die Einstellung der Bildschirmfläche störende Reflexionen zu minimieren. Da sich die Neigung der Bildschirmfläche gegenüber der Hochachse ändert, verläuft die Schwenkbewegung um eine virtuelle Schwenkachse, die wenigstens anteilig, normalerweise vollständig, horizontal verläuft. Dies steht im Unterschied zu einer Schwenkbewegung um eine vertikale Achse, bei der die Bildschirmfläche bspw. von einem Fahrer fort geschwenkt werden könnte, was ihm die Sicht auf möglicherweise wichtige Informationen nehmen könnte. Normalerweise verläuft die virtuelle Schwenkachse senkrecht zur Verlagerungsachse und in der horizontalen Ebene.

Durch die Kombination der Schwenkbewegung mit der translatorischen Verstellung wird ermöglicht, dass das Anzeigeelement in beiden genannten Stellungen vergleichsweise nah an den umgebenden Oberflächen des Innenraums angeordnet sein kann, d.h. sie muss in keiner der Stellungen weit in den Innenraum hineinragen, was die Insassen stören könnte oder Kollisionen mit dem Anzeigeelement begünstigen könnte, durch die dieses beschädigt werden könnte.

Wie erwähnt weist der Verstellmechanismus einen unteren Arm sowie einen oberen Arm auf, die jeweils über eine Anzeige-Schwenkachse mit dem Anzeigeelement verbunden sind, wobei der untere Arm in der Aufstellposition wenigstens teilweise niedriger angeordnet ist als der obere Arm. Zudem sind die Arme, wie oben erwähnt, wenigstens indirekt über wenigstens eine Innenraum-Schwenkachse mit dem Innenraumelement verbunden. Die Arme könnten auch als Hebel, Schwenkarme oder Schwenkhebel bezeichnet werden. Jeder der Arme kann normalerweise als in sich starres Element angesehen werden, welches sich beim normalen Betrieb höchstens in vernachlässigbarer Weise verformt. Die Arme sind jeweils über eine Anzeige-Schwenkachse schwenkbar mit dem Anzeigeelement verbunden, wobei die jeweilige Anzeige-Schwenkachse parallel zur virtuellen Schwenkachse des Anzeigeelements verläuft, d.h. normalerweise senkrecht zur Verlagerungsachse und in der horizontalen Ebene. Auf Seiten des Innenraumelements ist jeder Arm beweglich angebunden, und zwar über wenigstens eine Innenraum-Schwenkachse. Die Verbindung kann direkt oder indirekt gegeben sein, wobei die Innenraum-Schwenkachse in ersterem Fall am Arm angeordnet ist und in letzterem Fall an einem zwischen Arm und Innenraumelement zwischengeordneten Element. Der untere Arm ist in der Aufstellposition insgesamt (bezüglich der Hochachse) niedriger angeordnet als der oberer Arm, es ist aber auch möglich, dass nur Teile des unteren Arms niedriger angeordnet sind als der obere Arm.

Es hat sich herausgestellt, dass die Verbindung über (Schwenk-)Arme im Vergleich zu anderen denkbaren Lösungen vorteilhaft ist. Namentlich lässt sich eine spielfreie Verbindung zwischen Anzeigeelement und Innenraumelement mit der erfindungsgemäßen Verbindungsart in optimaler Weise realisieren. Dies liegt vor allem daran, dass der Schwenkmechanismus überwiegend bzw. normalerweise ausschließlich Schwenklager (welche den Schwenkachsen entsprechen) benötigt.

Diese lassen sich ohne Probleme spielfrei herstellen und behalten diese Eigenschaft auch über längere Zeiträume, im Gegensatz z.B. zu einer Schienenführung oder Linearführung. Letztere sind vor allem aufgrund des erheblichen Gewichts eines typischen Anzeigeelements (je nach Bauart z.B. 1-3 kg) schwierig zu realisieren und neigen mit zunehmender Lebensdauer zu Verschleiß, der wiederum die mechanischen Eigenschaften beeinträchtigt. Demgegenüber kann ein Schwenklager ohne Weiteres mit vernachlässigbarem Spiel realisiert werden und neigt z.B. in Form eines Wälzlagers kaum zum Verschleiß. Für den Benutzer ergibt sich somit auch langfristig eine zuverlässige Nutzbarkeit mit der Option, das Anzeigeelement in eine jeweils optimale Position zu verstellen und auf diese Weise den Innenraum des Fahrzeugs optimal zu nutzen.

Bevorzugt sind die Verlagerung und die Schwenkung des Anzeigeelements durch den Verstellmechanismus zwangsgekoppelt. D.h., der Verstellmechanismus reduziert die Anzahl der Freiheitsgrade auf 1. Somit entspricht eine bestimmte Neigung des Anzeigeelements einer bestimmten (translatorischen) Position bzw. umgekehrt. Außerdem sind auch die Aufstellposition und die Absenkposition durch die Zwangskopplung genau definiert. Durch die Zwangskopplung können einerseits optimale Endpositionen wiederholbar eingenommen werden sowie andererseits die Verstellbewegung zwischen diesen Endpositionen wiederholbar optimal durchgeführt werden.

Es ist grundsätzlich denkbar, dass die Verstellung des Anzeigeelements manuell erfolgt, wobei der Benutzer das Anzeigeelement anfassen und durch Krafteinwirkung verstellen kann. Auch in diesem Fall kann eine oben beschriebene Zwangskopplung von Vorteil sein, da sie dem Benutzer beim Verstellen unterstützt und ihn gewissermaßen anleitet, eine vorgesehene Verstellbewegung durchzuführen. Gemäß einer alternativen Ausgestaltung ist das Anzeigeelement aktorisch zwischen der Aufstellposition und der Absenkposition verstellbar. Vorteilhaft kann hierbei ein einziger (in der Regel elektrischer) Aktor vorgesehen sein. Auch in diesem Fall erleichtert die oben beschriebene Zwangskopplung ein effizientes, wiederholbares Verstellen durch lediglich einen Aktor.

Es kann ebenfalls vorteilhaft sein, wenn das Anzeigeelement in wenigstens einer Position aktorisch arretierbar ist. Eine derartige Arretierung könnte z.B. darin bestehen, dass ein aktorischer Antrieb selbsthemmend ausgebildet ist, so dass sich das Anzeigeelement nicht durch äußere Kräfte verstellen lässt, wenn der Aktor inaktiv ist. Alternativ könnte ein Aktor auch lediglich dazu dienen, eine Arretierung herzustellen oder zu lösen, bspw. über einen Formschluss. D.h. eine aktorische Arretierbarkeit könnte auch unabhängig von einer aktorischen Verstellbarkeit gegeben sein. Es ist bevorzugt, dass der Aktor die Arretierung aktiv löst und diese bei inaktivem Aktor automatisch hergestellt wird (z.B. durch ein Rückstellelement).

Gemäß der Erfindung ist im Bereich des Innenraumelements eine Zugangsöffnung eines Stauraums ausgebildet, zu welcher der Zugang in der Aufstellposition oder der Absenkposition durch das Anzeigeelement wenigstens eingeschränkt ist und die durch Verstellen des Anzeigeelements in die jeweils andere Position wenigstens überwiegend freigebbar ist. D.h. in der Aufstellposition oder in der Absenkposition ist das Anzeigeelement so angeordnet, dass für einen Benutzer der Zugriff auf den Stauraum durch die Zugangsöffnung nur teilweise möglich ist oder sogar unmöglich ist. Dies ist insofern allgemein unproblematisch, da der Zugang zu einem Stauraum wie bspw. einem Ablagefach normalerweise nicht ständig, unter Umständen sogar nur selten notwendig ist. Unter Umständen kann es sogar erwünscht sein, dass die Zugangsöffnung ganz oder teilweise durch das Anzeigeelement abgedeckt ist, so dass der Inhalt des Stauraums von außen nicht sichtbar ist. Auch kann es möglich sein, dass diejenige Position, in der der Zugriff zum Stauraum eingeschränkt ist die ergonomisch günstigste Position des Anzeigeelement darstellt. Wird das Anzeigeelement in die jeweils andere Position (Absenkposition bzw. Aufstellposition) verstellt, wird die Zugangsöffnung ganz oder wenigstens teilweise freigegeben, so dass der Zugriff auf den Stauraum entweder ungehindert möglich ist oder zumindest besser möglich ist als in der zuvor eingenommenen Position. Insbesondere kann bei einem Stauraum innerhalb des Armaturenbretts die Zugriffsöffnung in der Aufstellposition (ganz oder teilweise) abgedeckt sein, während sie bei einem Stauraum innerhalb einer Mittelkonsole in der Absenkposition ganz oder teilweise abgedeckt sein kann. Der Stauraum und die Zugangsöffnung können im Innenraumelement ausgebildet sein oder in einem anderen Element, welches ebenfalls als Teil der Baugruppe angesehen werden kann.

Gemäß der Erfindung entspricht die Verlagerungsachse der Längsachse des Fahrzeugs und die Anzeigeseite ist bezüglich der Längsachse heckseitig angeordnet. Man könnte auch sagen, die Bildschirmfläche weist in der Aufstellposition nach hinten. Dementsprechend hat ein Nutzer gute Sicht auf die Bildschirmfläche, wenn er das Anzeigeelement (zur Fahrzeugfront hin) vor sich hat, ggf. auch schräg vor sich. Dies entspricht einer natürlichen, ergonomisch sinnvollen Blickrichtung.

Allgemein kann das Innenraumelement z.B. eine Armlehne, eine Sitzrückseite oder dergleichen sein. Wie oben erwähnt gehört das Innenraumelement wenigstens teilweise zu einer Mittelkonsole und/oder einem Armaturenbrett. Das Innenraumelement kann dabei einen Teil von Mittelkonsole und/oder Armaturenbrett bilden oder eines der genannten Elemente vollständig bilden. Das Innenraumelement muss dabei nicht zwangsläufig die dem Benutzer zugewandten Oberfläche bilden, sondern könnte mit einer Verkleidung versehen sein. Bei dieser Ausführungsform ist das Innenraumelement sowohl im Sichtbereich des Fahrers angeordnet als auch in seinem Zugriffsbereich. Gleiches gilt dann auch normalerweise für das Anzeigeelement. Bei dieser Ausgestaltung entspricht die Verlagerungsachse bevorzugt der Längsachse. Dabei kann die Bildschirmfläche für den Fahrer unabhängig von der Position des Anzeigeelements sichtbar bleiben, da sich nur deren Neigung gegenüber der Hochachse verändert, d.h. die Bildschirmfläche wird normalerweise nicht seitlich vom Fahrer weggeschwenkt, wobei er die angezeigten Informationen u.U. nicht mehr effektiv ablesen könnte.

Gemäß einer Ausführungsform ist wenigstens einer der Arme über eine Innenraum-Schwenkachse direkt mit dem Innenraumelement schwenkbar verbunden. Der entsprechende Arm ist also einerseits schwenkbar mit dem Anzeigeelement verbunden sowie andererseits schwenkbar mit dem Innenraumelement verbunden. Dementsprechend bewegt sich der mit ihm verbundene Teil des Anzeigeelements bzw. die Anzeige-Schwenkachse auf einem Kreisbogen um die auf Seiten des Innenraumelements angeordnete Innenraum-Schwenkachse. Es können auch beide Arme direkt mit dem Innenraumelement verbunden sein. Auch bei dieser einfachen Ausgestaltung lassen sich unterschiedliche Bewegungen bzw. Positionen des Anzeigeelements realisieren, indem die Länge der Arme sowie die Position der Anzeige-Schwenkachsen und der Innenraum-Schwenkachsen geeignet gewählt werden.

Unter Umständen kann eine andere, z.B. nicht kreisbogenförmige Bewegung der Anzeige-Schwenkachse wünschenswert sein. Diese lässt sich beispielsweise dadurch realisieren, dass der obere Arm über jeweils eine Zwischen-Schwenkachse schwenkbar mit zwei oberen Hilfsarmen verbunden ist, von denen jeder über jeweils eine Innenraum-Schwenkachse schwenkbar mit dem Innenraumelement verbunden ist. Der obere Arm ist somit an zwei Stellen indirekt mit dem Innenraumelement verbunden, nämlich über die zwei Hilfsarme. Durch geeignete Auswahl der Abstände der verschiedenen Schwenkachsen der beiden Hilfsarme lassen sich unterschiedliche Zwangsbedingungen realisieren und somit unterschiedliche Bewegungsbahnen des oberen Arms. All dies lässt sich ausschließlich mit Schwenkachsen realisieren, d.h. es können ausschließlich Schwenklager verwendet werden, welche eine (nahezu) spielfreie Führung ermöglichen.

Alternativ kann der untere Arm schwenkbar über jeweils eine Zwischen-Schwenkachse mit zwei unteren Hilfsarmen verbunden sein, von denen jeder über jeweils eine Innenraum-Schwenkachse schwenkbar mit dem Innenraumelement verbunden ist. Auch hiermit lassen sich vielfältige, nicht-kreisbogenförmige Bewegungen des unteren Arms realisieren. Besondere Gestaltungsmöglichkeiten eröffnen sich, was aber von der Erfindung nicht beansprucht wird, wenn sowohl der untere Arm als auch der obere Arm über jeweils zwei (untere bzw. obere) Hilfsarme mit dem Innenraumelement verbunden sind. Damit lassen sich die Bewegungsbahnen zweier Schwenkachsen am Anzeigeelement individuell bestimmen, wodurch sich wiederum der Zusammenhang zwischen (translatorischer) Position und Schwenkwinkel des Anzeigeelements festlegen lässt. Auch hierbei ist zur Umsetzung lediglich eine Mehrzahl von Schwenkachsen bzw. Schwenklager notwendig, so dass eine (nahezu) spielfreie Führung möglich ist.

Weitere vorteilhafte Einzelheiten und Wirkungen der Erfindung sind im Folgenden anhand eines in den Figuren dargestellten Ausführungsbeispiels näher erläutert. Es zeigen
- Fig. 1: eine Schnittdarstellung einer ersten Ausführungsform einer erfindungsgemäßen Baugruppe mit einem Anzeigeelement in einer Aufstellposition;
- Fig. 2: eine Schnittdarstellung der Baugruppe aus Fig.1 mit dem Anzeigeelement in einer Absenkposition;
- Fig. 3: eine Schnittdarstellung einer zweiten Ausführungsform einer erfindungsgemäßen Baugruppe mit einem Anzeigeelement in einer Aufstellposition;
- Fig. 4: eine Schnittdarstellung der Baugruppe aus Fig.3 mit dem Anzeigeelement in einer Absenkposition;
- Fig. 5: eine Schnittdarstellung einer dritten Ausführungsform einer Baugruppe mit einem Anzeigeelement in einer Aufstellposition;
- Fig. 6: eine Schnittdarstellung der Baugruppe aus Fig.5 mit dem Anzeigeelement in einer Absenkposition; sowie
- Fig. 7: eine Darstellung von einhüllenden Kurven des Anzeigeelements beim Verstellen gemäß der ersten, zweiten und dritten Ausführungsform.

In den unterschiedlichen Figuren sind gleiche Teile stets mit denselben Bezugszeichen versehen, weswegen diese in der Regel auch nur einmal beschrieben werden.

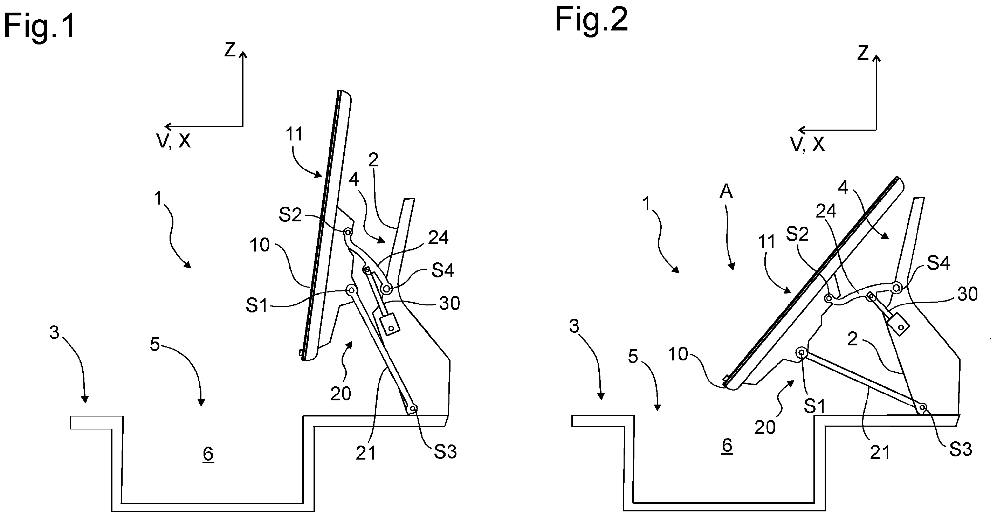

Fig. 1 und 2 zeigen eine erste Ausführungsform einer erfindungsgemäßen Baugruppe 1, die im Innenraum eines Kraftfahrzeugs, in diesem Fall eines PKWs, eingebaut ist. Ein Innenraumelement 2 der Baugruppe 1 ist jeweils teilweise einer Mittelkonsole 3 sowie einem Armaturenbrett 4 zugeordnet. In der Mittelkonsole 4 ist ein Stauraum 6 ausgebildet, auf den über eine Zugangsöffnung 5 zugegriffen werden kann. Ein Anzeigeelement 10, das beispielsweise dazu dienen kann, Informationen betreffend die Navigation, den allgemeinen Fahrzeugbetrieb oder Unterhaltungsmedien anzuzeigen, weist eine Bildschirmfläche 11 auf, die beispielsweise durch einen Flachbildschirm gebildet sein kann, der gleichzeitig als Touchscreen ausgebildet ist. Dementsprechend können verschiedene virtuelle Bedienelemente auf der Bildschirmfläche 11 angezeigt werden, mittels derer ein Benutzer (zum Beispiel der Fahrer) verschiedene Funktionen steuern kann.

Das Anzeigeelement 10 ist über einen Verstellmechanismus 20 mit dem Innenraumelement 2 verbunden. Der Verstellmechanismus weist einen unteren Arm 21 auf, der über eine erste Anzeige-Schwenkachse S1 mit dem Anzeigeelement 10 und über eine erste Innenraum-Schwenkachse S3 mit dem Innenraumelement 2 verbunden ist, sowie einen oberen Arm 24, der über eine zweite Anzeige-Schwenkachse S2 mit dem Anzeigeelement 10 sowie eine zweite Innenraum-Schwenkachse S4 mit dem Innenraumelement 2 verbunden ist. Außerdem weist der Verstellmechanismus 20 einen hier stark schematisiert dargestellten Aktor 30 auf, der den oberen Arm 24 mit dem Innenraumelement 2 verbindet.

Fig. 1 zeigt das Anzeigeelement 10 in einer Aufstellposition, in welcher die Bildschirmfläche 11 einen vergleichsweise geringen Winkel von in diesem Beispiel ca. 10° mit einer Hochachse (Z-Achse) des Fahrzeugs einschließt. Bezüglich einer Verlagerungsachse V, die in diesem Fall mit der Längsachse (X-Achse) des Fahrzeugs identisch ist, ist die Bildschirmfläche 11 auf einer Anzeigeseite A angeordnet. Das Anzeigeelement 10 ist in der Nähe der Oberfläche des Armaturenbretts 4 und näherungsweise parallel zu dieser angeordnet. Die Bildschirmfläche 11 ist für den Fahrer gut ablesbar und zur Eingabe von Kommandos erreichbar. Die Zugangsöffnung 5 des Stauraums 6 ist frei zugänglich.

Mittels des Aktors 30, welcher im gezeigten Beispiel als Linearaktor auf den oberen Arm 24 einwirkt und diesen mit einem Drehmoment beaufschlagen kann, kann das Anzeigeelement 10 in eine in Fig. 2 dargestellte Absenkposition verstellt werden. Die Bewegung entspricht einer Kombination einer Schwenkbewegung und einer translatorischen Verlagerung. Durch die translatorische Verlagerung wird das Anzeigeelement 10 insgesamt bezüglich der Hochachse abwärts verlagert sowie entlang der Verlagerungsachse V zur Anzeigeseite A hin. Entsprechend der Schwenkbewegung wird die Bildschirmfläche 11 von der Hochachse fort geschwenkt, bis sie schließlich in einem Winkel von ca. 40° zur Hochachse Z ausgerichtet ist. Die Schwenkbewegung verläuft um eine (nicht ortsfeste) virtuelle Schwenkachse senkrecht zur Zeichenebene, also parallel zur Querachse (Y-Achse). Da die beiden Arme 21, 24 eine feste Länge aufweisen und über ortsfeste Innenraum-Schwenkachsen S3, S4 mit dem Innenraumelement 2 verbunden sind sowie über bezüglich des Anzeigeelements 10 ortsfeste Anzeige-Schwenkachsen S1, S2 mit dem Anzeigeelement 10 verbunden sind, ist die translatorische Verschiebung des Anzeigeelements 10 an die Schwenkbewegung zwangsgekoppelt, d.h. einer (translatorischen) Position des Anzeigeelement 10 ist eine bestimmte Neigung gegenüber der Hochachse Z zugeordnet. Wie aus den Figuren 1 und 2 deutlich wird, ist das Anzeigeelement 10 sowohl in der Aufstellposition als auch in der Absenkposition vergleichsweise dicht an der jeweiligen Oberfläche des Armaturenbretts 4 bzw. der Mittelkonsole 3 angeordnet, wobei es in der Absenkposition die Zugriffsöffnung 5 teilweise abdeckt, so dass der Inhalt des Stauraums 6 schwer zugänglich und optisch teilweise verdeckt ist. Durch erneutes Verstellen in die Aufstellposition kann wiederum auf den Stauraum 6 ohne Beschränkung zugegriffen werden. Dabei ist die Bildschirmfläche 11 nicht nur in der Aufstellposition, sondern auch in der Absenkposition für den Fahrer gut einsehbar und bedienbar.

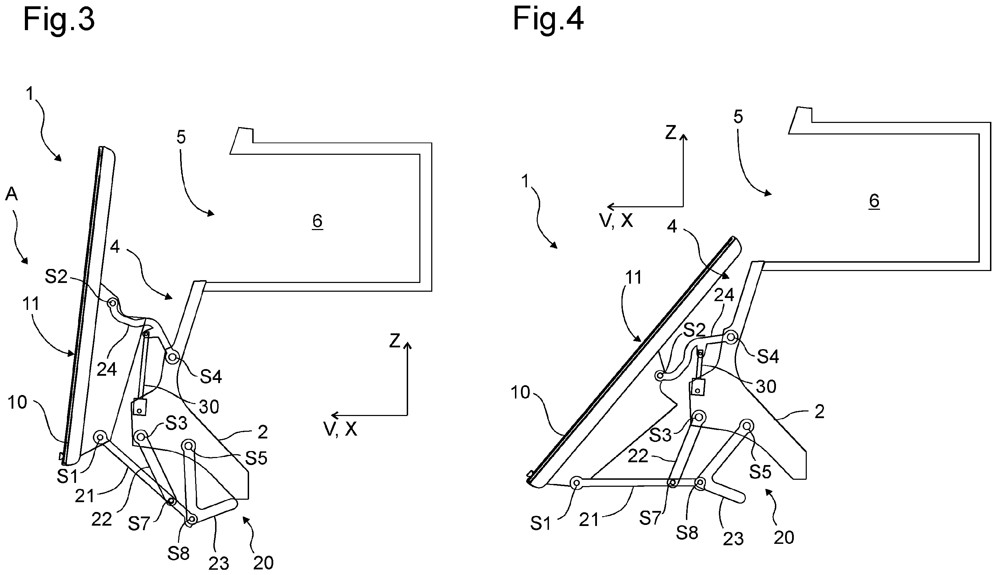

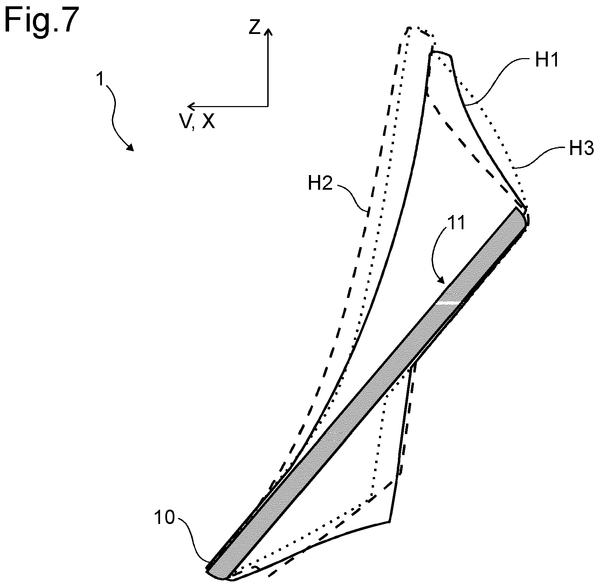

Die Figuren 3 und 4 zeigen eine zweite Ausführungsform einer erfindungsgemäßen Baugruppe 1, bei der das Innenraumelement 2 vollständig dem Armaturenbrett 4 zugeordnet ist. Der Verstellmechanismus 20 unterscheidet sich von der ersten Ausführungsform insbesondere insofern, als der untere Arm 21 nicht unmittelbar mit dem Innenraumelement 2 verbunden ist, sondern über eine erste Zwischen-Schwenkachse S7 sowie eine zweite Zwischen-Schwenkachse S8 mit zwei unteren Hilfsarmen 22, 23 verbunden ist, wobei der erste untere Hilfsarm 22 über eine erste Innenraum-Schwenkachse S3 schwenkbar mit dem Innenraumelement 2 verbunden ist und der zweite untere Hilfsarm 23 über eine dritte Innenraum-Schwenkachse S5 schwenkbar mit dem Innenraumelement 2 verbunden ist. Durch diese indirekte Ankopplung bewegen sich der untere Schwenkarm 21 und insbesondere die erste Anzeige-Schwenkachse S1 am Anzeigeelement 10 nicht auf einer kreisbogenförmigen Bahn. Hierdurch gelangt das Anzeigeelement 10 in eine höhere Aufstellposition, während es im oberen Bereich einen größeren Abstand zum Armaturenbrett 4 hält. Dies geht aus Fig. 7 hervor, in der das Anzeigeelement 10 in der Absenkposition dargestellt ist sowie eine erste Hüllkurve H1 (als durchgezogene Linie) entsprechend dem ersten Ausführungsbeispiel, eine zweite Hüllkurve H2 (als gestrichelte Linie) entsprechend dem zweiten Ausführungsbeispiel und eine dritte Hüllkurve H3 (als gepunktete Linie) entsprechend einem dritten Ausführungsbeispiel. In dem gezeigten Beispiel ist oberhalb des Verstellmechanismus' 20 ein Stauraum 6, etwa ein Handschuhfach, ausgebildet, der wiederum über eine Zugangsöffnung 5 zugänglich ist. In der Aufstellposition gemäß Fig. 3 ist der Zugang zum Stauraum 6 nicht bzw. nur sehr eingeschränkt möglich. Wird das Anzeigeelement 10 jedoch in die in Fig. 4 dargestellte Absenkposition verstellt, kann ungehindert auf den Stauraum 6 zugegriffen werden. Die Verstellung des Anzeigeelement 10 erfolgt wiederum über einen hier schematisch dargestellten Aktor 30.

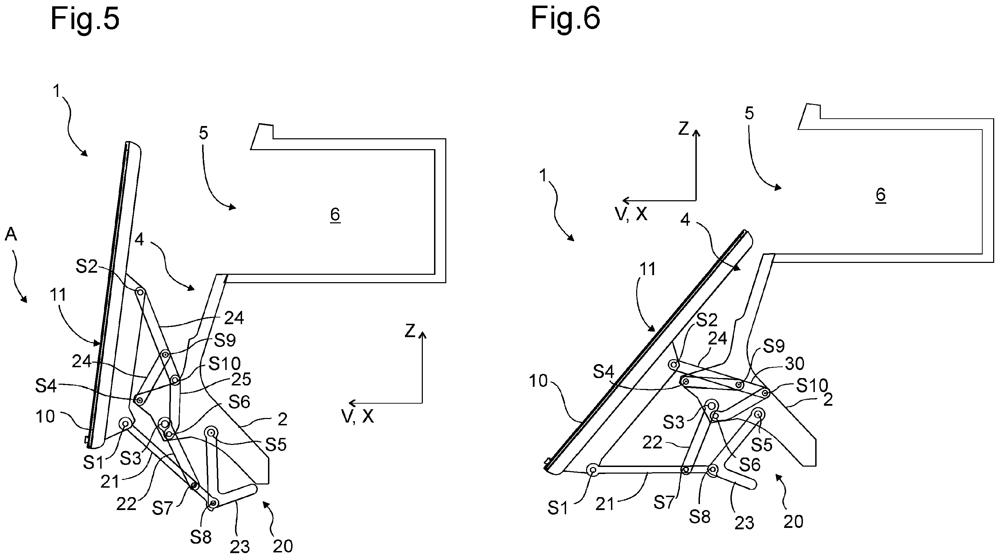

Fig. 5 und 6 zeigen eine dritte, von der Erfindung nicht umfasste Ausführungsform, die weitgehend mit der zweiten Ausführungsform übereinstimmt und insoweit nicht nochmals erläutert wird. Während bei der zweiten Ausführungsform allerdings der obere Arm 24 unmittelbar über die zweite Innenraum-Schwenkachse S4 mit dem Innenraumelement 2 verbunden ist, ist er bei der dritten Ausführungsform über eine dritte Zwischen-Schwenkachse S9 mit einem ersten oberen Hilfsarm 24 verbunden und über eine vierte Zwischen-Schwenkachse S10 mit einem zweiten oberen Hilfsarm 25. Die genannten oberen Hilfsarme 24, 25 sind ihrerseits über eine zweite Innenraum-Schwenkachse S4 bzw. eine vierte Innenraum-Schwenkachse S6 mit dem Innenraumelement 2 verbunden. Insofern bewegt sich die zweite Anzeige-Schwenkachse S2 im Gegensatz zur zweiten Ausführungsform nicht kreisbogenförmig, sondern auf einer komplexeren Bahn, die im Wesentlichen durch die Anordnung der zweiten und vierten Innenraum-Schwenkachse S4, S6 und der dritten und vierten Zwischen-Schwenkachse S9, S10 sowie deren Abstände bestimmt wird. Wie aus Fig. 7 hervorgeht, wird hierdurch erreicht, dass sich das Anzeigeelement 10 im Vergleich zur zweiten Ausführungsform bezüglich der Längsachse X früher bzw. weiter nach vorne (zum Armaturenbrett 4 hin) zurückweicht, während es im Vergleich zur ersten Ausführungsform in der Aufstellposition höher angeordnet ist.

In dem hier gezeigten Beispiel ist kein Aktor zur Verstellung des Anzeigeelement 10 vorgesehen, d.h. dieses kann bspw. manuell verstellt werden, wobei der Verstellmechanismus 20 einen Benutzer gewissermaßen haptisch anleitet, wiederholbar die Aufstellposition, die Absenkposition sowie ggf. unterschiedliche Zwischenposition einzustellen. Optional könnte auch bei der dritten Ausführungsform ein Aktor zum Verstellen des Anzeigeelements 10 vorgesehen sein. Auch könnte eine hier nicht dargestellte Arretierung vorgesehen sein, die z.B. durch ein Rückstellelement in Richtung auf eine Sperrposition beaufschlagt wird, in der sie den Verstellmechanismus 20 blockiert. Durch einen Aktor könnte die Arretierung in eine Freigabeposition verstellt werden, wobei sie in die Sperrposition zurückkehrt, wenn der Aktor (z.B. bei ausgeschalteter Zündung) inaktiv ist. Auch bei der ersten und zweiten Ausführungsform könnte optional der Aktor 30 weggelassen werden, so dass die Verstellung des Anzeigeelements 10 manuell erfolgen kann.

### Bezugszeichenliste

- 1: Baugruppe
- 2: Innenraumelement
- 3: Mittelkonsole
- 4: Armaturenbrett
- 5: Zugangsöffnung
- 6: Stauraum
- 10: Anzeigeelement
- 11: Bildschirmfläche
- 20: Verstellmechanismus
- 21, 24: Arm
- 22, 23, 25, 26: Hilfsarm
- 30: Aktor
- A: Anzeigeseite
- S1, S2: Anzeige-Schwenkachse
- S3-S6: Innenraum-Schwenkachse
- S7-S10: Zwischen-Schwenkachse
- V: Verlagerungsachse
- X: X-Achse
- Z: Z-Achse

## Patentansprüche

1. Baugruppe (1) für ein Fahrzeug, aufweisend ein Innenraumelement (2) sowie ein mit diesem über einen Verstellmechanismus (20) verbundenes Anzeigeelement (10) mit einer Bildschirmfläche (11),
wobei das Anzeigeelement (10) mittels des Verstellmechanismus' (20) verstellbar ist zwischen einer Aufstellposition, in welcher die Bildschirmfläche (11) bezüglich einer horizontalen Verlagerungsachse (V) auf einer Anzeigeseite (A) angeordnet ist, und einer Absenkposition, in welcher sie gegenüber der Aufstellposition bezüglich der Hochachse (Z) des Fahrzeugs abwärts sowie bezüglich der Verlagerungsachse (V) zur Anzeigeseite (A) hin verlagert ist und die Bildschirmfläche (11) von der Hochachse (Z) fort abwärts geschwenkt ist, wobei der Verstellmechanismus (20) einen unteren Arm (21) sowie einen oberen Arm (24) aufweist, die jeweils über eine Anzeige-Schwenkachse (S1, S2) mit dem Anzeigeelement (20) verbunden sind, und wobei der untere Arm (21) in der Aufstellposition niedriger angeordnet ist als der obere Arm (24),
wobei der untere Arm (21) und der obere Arm (24) über wenigstens eine Innenraum-Schwenkachse (S3-S6) wenigstens indirekt mit dem Innenraumelement (2), welches wenigstens teilweise zu einer Mittelkonsole (3) und/oder einem Armaturenbrett (4) gehört, schwenkbar verbunden sind, wobei die Verlagerungsachse (V) der Längsachse (X) des Fahrzeugs entspricht und die Anzeigeseite (A) bezüglich der Längsachse (X) heckseitig angeordnet ist, und wobei im Bereich des Innenraumelements (2) eine Zugangsöffnung (5) eines Stauraums (6) ausgebildet ist, zu welcher der Zugang in der Aufstellposition oder der Absenkposition durch das Anzeigeelement (10) wenigstens eingeschränkt ist und die durch Verstellen des Anzeigeelements (10) in die jeweils andere Position wenigstens überwiegend freigebbar ist.

2. Baugruppe nach Anspruch 1,
**dadurch gekennzeichnet, dass**
die Verlagerung und die Schwenkung des Anzeigeelements (10) durch den Verstellmechanismus (20) zwangsgekoppelt sind.

3. Baugruppe nach einem der vorherigen Ansprüche,
**dadurch gekennzeichnet, dass**
das Anzeigeelement (10) aktorisch zwischen der Aufstellposition und der Absenkposition verstellbar ist.

4. Baugruppe nach einem der vorherigen Ansprüche,
**dadurch gekennzeichnet, dass**
das Anzeigeelement (10) in wenigstens einer Position aktorisch arretierbar ist.

5. Baugruppe nach einem der vorherigen Ansprüche,
**dadurch gekennzeichnet, dass**
wenigstens einer der Arme (21, 24) über eine Innenraum-Schwenkachse (S3-S6) direkt mit dem Innenraumelement (2) schwenkbar verbunden ist.

6. Baugruppe nach einem der vorherigen Ansprüche,
**dadurch gekennzeichnet, dass**
der obere Arm (24) über jeweils eine Zwischen-Schwenkachse (S7-S10) schwenkbar mit zwei oberen Hilfsarmen (25, 26) verbunden ist, von denen jeder über jeweils eine Innenraum-Schwenkachse (S3-S6) schwenkbar mit dem Innenraumelement (2) verbunden ist.

7. Baugruppe nach einem der vorherigen Ansprüche,
**dadurch gekennzeichnet, dass**
der untere Arm (21) über jeweils eine Zwischen-Schwenkachse (S7-S10) schwenkbar mit zwei unteren Hilfsarmen (22, 23) verbunden ist, von denen jeder über jeweils eine Innenraum-Schwenkachse (S3-S6) schwenkbar mit dem Innenraumelement (2) verbunden ist.

## Claims

1. Assembly (1) for a vehicle, comprising an interior element (2) and a display element (10) connected to this via an adjustment mechanism (20) with a screen surface (11),
wherein the display element (10) is adjustable by means of the adjustment mechanism (20) between a deployed position, in which the screen surface (11) is arranged on a display side (A) with respect to a horizontal displacement axis (V), and a lowered position, in which it is moved downwards with respect to the deployed position with regard to the vertical axis (Z) of the vehicle and with regard to the displacement axis (V) towards the display side (A) and the screen surface (11) is pivoted downwards away from the vertical axis (Z), wherein the adjustment mechanism (20) has a lower arm (21) and an upper arm (24), each connected via a display pivot axis (S1, S2) to the display element (20), and wherein, in the deployed position, the lower arm (21) is arranged lower than the upper arm (24),
wherein the lower arm (21) and the upper arm (24) are pivotably connected via at least one interior pivot axis (S3-S6) at least indirectly to the interior element (2) which at least partially belongs to a centre console (3) and/or a dashboard (4), wherein the displacement axis (V) corresponds to the longitudinal axis (X) of the vehicle, and the display side (A) is arranged on the rear side with regard to the longitudinal axis (X), and wherein, in the region of the interior element (2), an access opening (5) of a stowage space (6) is formed, to which the access in the deployed position or the lowered position by the display element (10) is at least restricted and which can be released by adjusting the display element (10) at least predominantly into the respective other position.

2. Assembly according to Claim 1,
**characterized in that**
the displacement and the pivoting of the display element (10) are positively coupled by the adjustment mechanism (20).

3. Assembly according to either of the preceding claims,
**characterized in that**
the display element (10) is adjustable by actuator between the deployed position and the lowered position.

4. Assembly according to one of the preceding claims,
**characterized in that**
the display element (10) can be locked by actuator in at least one position.

5. Assembly according to one of the preceding claims,
**characterized in that**
at least one of the arms (21, 24) is pivotably connected via an interior pivot axis (S3-S6) directly to the interior element (2).

6. Assembly according to one of the preceding claims, **characterized in that**
the upper arm (24) is pivotably connected via in each case one intermediate pivot axis (S7-S10) to two upper auxiliary arms (25, 26), each of which is connected pivotably to the interior element (2) via an interior pivot axis (S3-S6).

7. Assembly according to one of the preceding claims,
**characterized in that**
the lower arm (21) is pivotably connected via in each case one intermediate pivot axis (S7-S10) to two lower auxiliary arms (22, 23), each of which is connected pivotably to the interior element (2) via an interior pivot axis (S3-S6).

## Revendications

1. Ensemble (1) pour véhicule, comprenant un élément intérieur (2) et un élément d'affichage (10) relié à celui-ci par l'intermédiaire d'un mécanisme de réglage (20) et présentant une surface d'écran (11),
l'élément d'affichage (10) étant réglable au moyen du mécanisme de réglage (20) entre une position de montage, à laquelle la surface d'écran (11) est disposée sur un côté d'affichage (A) par rapport à un axe de déplacement horizontal (V), et une position abaissée, à laquelle il est déplacé vers le bas à l'opposé de la position de montage par rapport à l'axe vertical (Z) du véhicule et par rapport à l'axe de déplacement (V) vers le côté d'affichage (A), et la surface d'écran (11) est pivotée vers le bas en s'éloignant de l'axe vertical (Z), le mécanisme de réglage (20) présentant un bras inférieur (21) et un bras supérieur (24) qui sont respectivement reliés à l'élément d'affichage (20) par l'intermédiaire d'un axe de pivotement d'affichage (S1, S2), le bras inférieur (21), dans la position de montage, étant disposé plus bas que le bras supérieur (24),
le bras inférieur (21) et le bras supérieur (24) étant reliés de manière pivotante, au moins indirectement, par l'intermédiaire d'au moins un axe de pivotement intérieur (S3-S6), à l'élément intérieur (2), lequel fait partie, au moins partiellement, d'une console centrale (3) et/ou d'un tableau de bord (4), l'axe de déplacement (V) correspondant à l'axe longitudinal (X) du véhicule et le côté d'affichage (A) étant disposé à l'arrière par rapport à l'axe longitudinal (X), et une ouverture d'accès (5) d'un espace de stockage (6) étant formée dans la zone de l'élément intérieur (2), ouverture à laquelle l'accès en position de montage ou en position abaissée est limité par l'élément d'affichage (10) et qui peut être dégagée au moins principalement par le réglage de l'élément d'affichage (10) dans l'autre position respective.

2. Ensemble selon la revendication 1,
**caractérisé en ce que**
le déplacement et le pivotement de l'élément d'affichage (10) sont couplés de force par le mécanisme de réglage (20).

3. Ensemble selon l'une quelconque des revendications précédentes,
**caractérisé en ce que**
l'élément d'affichage (10) peut être réglé par actionneur entre la position de montage et la position abaissée.

4. Ensemble selon l'une quelconque des revendications précédentes,
**caractérisé en ce que**
l'élément d'affichage (10) peut être verrouillé par actionneur dans au moins une position.

5. Ensemble selon l'une quelconque des revendications précédentes,
**caractérisé en ce que**
au moins l'un des bras (21, 24) est directement relié de manière pivotante à l'élément intérieur (2) par l'intermédiaire d'un axe de pivotement intérieur (S3-S6).

6. Ensemble selon l'une quelconque des revendications précédentes,
**caractérisé en ce que**
le bras supérieur (24) est relié de manière pivotante par l'intermédiaire d'un axe de pivotement intermédiaire (S7-S10) à deux bras auxiliaires supérieurs (25, 26) qui sont reliés de manière pivotante à l'élément intérieur (2) par l'intermédiaire d'un axe de pivotement intérieur (S3-S6).

7. Ensemble selon l'une quelconque des revendications précédentes,
**caractérisé en ce que**
le bras inférieur (21) est relié de manière pivotante par l'intermédiaire d'un axe de pivotement intermédiaire (S7-S10) à deux bras auxiliaires inférieurs (22, 23) qui sont reliés de manière pivotante à l'élément intérieur (2) par l'intermédiaire d'un axe de pivotement intérieur (S3-S6).
